Europäisches Patentamt

European Patent Office

Office européen des brevets

(11) Veröffentlichungsnummer: **0 496 009 A1**

## EUROPÄISCHE PATENTANMELDUNG

(21) Anmeldenummer: **91100662.5**

(22) Anmeldetag: **21.01.91**

(51) Int. Cl.5: **H04B 1/04**

(43) Veröffentlichungstag der Anmeldung:
**29.07.92 Patentblatt 92/31**

(84) Benannte Vertragsstaaten:
**AT BE CH DE DK ES FR GB GR IT LI LU NL SE**

(71) Anmelder: **ASEA BROWN BOVERI AG**
**Haselstrasse**
**CH-5401 Baden(CH)**

(72) Erfinder: **Tomljenovic, Juraj**
**Oberfeldstrasse 324**
**CH-5306 Tegerfelden(CH)**
Erfinder: **Tschol, Wilhelm**
**Hagenbüchlerstrasse 1**
**CH-5442 Fislisbach(CH)**

(54) **AM-Rundfunksender.**

(57) Bei einem Hochleistungs-AM-Rundfunksender mit einer Tetrode als Endstufenröhre (13), wird diese Endstufenröhre (13) als Niederspannungs-Tetrode mit einer Anodengleichspannung <10 kV und einem Anodenwirkungsgrad >80% ausgebildet.

Durch diese Massnahme wird ein kompakter Senderaufbau bei weitgehend unverändertem Gesamtwirkungsgrad erreicht.

FIG.1

TECHNISCHES GEBIET

Die vorliegende Erfindung bezieht sich auf das Gebiet der Rundfunktechnik. Sie betrifft insbesondere einen AM-Rundfunksender mit einer Ausgangsleistung von wenigstens 50 kW, umfassend

(a) einen NF-Teil mit einem NF-Eingang und einem an den NF-Eingang angeschlossenen Modulationsverstärker; und

(b) einen HF-Teil mit einem Oszillator, einem an den Oszillator angeschlossenen Treiberverstärker und einer Endstufenröhre in Form einer Tetrode, welche eine Anode, eine Kathode, ein Steuergitter und ein Schirmgitter aufweist, wobei die Anode mit dem Ausgang des Modulationsverstärkers und das Steuergitter mit dem Ausgang des Treiberverstärkers in Verbindung stehen;

Ein solcher Rundfunksender ist z.B. aus der Druckschrift Brown Boveri Mitt. 69, 1982(6), S.212-217, bekannt.

STAND DER TECHNIK

Rundfunksender der bekannten Art mit Amplitudenmodulation (AM) werden insbesondere im Kurzwellenbereich (etwa 3,9 - 26,1 MHz) eingesetzt. Der NF-Teil sorgt hierbei für die Aufbereitung und Leistungsverstärkung des zu übertragenden NF-Signals, welches dann (bei der üblichen Anodenmodulation) auf die Anode der Endstufenröhre gegeben wird. Der Trägerfrequenz-Oszillator mit der nachfolgenden Treiberstufe stellt im HF-Teil ein leistungsverstärktes Trägersignal bereit, welches auf das Steuergitter der Endstufenröhre gelangt und zusammen mit der im Takt des NF-Signals schwingenden Anodenspannung das gewünschte AM-Signal an eine Last, die Antenne, abgibt.

Da derartige Rundfunksender üblicherweise in einem Leistungsbereich von mehr als 50 kW bis zu einigen 100 kW Ausgangsleistung arbeiten, spielt bei der Entwicklung und Auslegung eines solchen Senders der Wirkungsgrad, d.h. das Verhältnis von eingesetzter zu nutzbarer Leistung, eine zentrale Rolle. Massgeblichen Anteil am Gesamtwirkungsgrad des Senders, der grösser 70% sein kann, hat dabei die Endstufenröhre.

Ihr Wirkungsgrad, der sogenannte Anodenwirkungsgrad ist unter anderem proportional zu dem Ausdruck $1-(u_s/u_{a0})$, wobei $u_s$ (auch $U_{ar}$ genannt) die nicht aussteuerbare Restspannung und $u_{a0}$ (auch $U_a$ genannt) die Anodengleichspannung bezeichnet. Der Anodenwirkungsgrad steigt daher bei konstanter Restspannung mit zunehmender Anodengleichspannung (Brown Boveri Mitt. 71, 1984(5), S.199).

Ein guter Anodenwirkungsgrad fordert deshalb in allen Fällen eine hohe Anodengleichspannung $u_{a0}$, damit der nicht aussteuerbare Rest $u_s$ demgegenüber relativ klein bleibt (siehe dazu: Meinke/Gundlach, Taschenbuch der Hochfrequenztechnik, 3.Auflage, Springer-Verlag 1968, S.1035-1037). Die üblichen Betriebsspannungen bei Grossendern mit Hochleistungs-Tetroden in der HF-Endstufe liegen daher heute zwischen 10 und 14 kV (siehe dazu: Meinke/Gundlach, Taschenbuch der Hochfrequenztechnik, 4.Auflage, Springer-Verlag 1986, S.P9).

Als Beispiele für diese im Stand der Technik erreichten Werte sei auf die folgenden beiden Kurzwellensender hingewiesen:

(1) Auf den in der eingangs genannten Druckschrift beschriebenen 250-kW-Kurzwellensender, der in seiner HF-Endstufe mit einer Hochleistungs-Tetrode vom Typ BBC CQK 350-1 bestückt ist. Diese Tetrode arbeitet bei Anodenmodulation im Klasse-C-Betrieb mit einer Anodengleichspannung von 14 kV, einer Schirmgittergleichspannung von 1300 V und einer Steuergittergleichspannung von -900 V und hat einen Wirkungsgrad von 85,2% (Brown Boveri Mitt. 69, 1982(6), S.219).

(2) Auf den in der Druckschrift Brown Boveri Mitt. 67, 1980(3), S.215-219 beschriebenen 100-kW-Kurzwellensender, der in seiner HF-Endstufe mit einer Hochleistungs-Tetrode vom Typ BBC CQK 50-2 bestückt ist. Diese Tetrode arbeitet bei Anodenmodulation im Klasse-C-Betrieb mit einer Anodengleichspannung von 11 kV, einer Schirmgittergleichspannung von 800 V und einer Steuergittergleichspannung von -600 V (BBC Kurzdatenkatalog Elektronenröhren, Druckschrift-Nr. CH-E 3.30475.8 D/F/E/S von 1982/83).

Die vergleichsweise hohen Anodenspannungen erfordern im Zusammenhang mit der Anodenmodulation entsprechend ausgelegte Modulationsverstärker, die bei einer Anodengleichspannung von 14 kV Ausgangsspannungen von 0 bis 28 kV liefern müssen.

Wird als Modulationsverstärker z.B. ein Pulsstufenmodulator PSM, d.h. ein digitaler Schaltverstärker, verwendet, werden innerhalb dieses PSM beispielsweise 32 Schaltstufen benötigt, deren Ausgangsspannungen sich zu der gewünschten Anodenspannung addieren (Brown Boveri Tech. 74, 1987(6), S.296-302). Da jede einzelne dieser 32 Hochleistungs-Schaltstufen entsprechenden Raum beansprucht, müssen für den PSM im Sender separate Schränke vorgesehen werden.

Aber auch bei anderen Komponenten der Senderschaltung führt die hohe Anodengleichspannung und die dafür notwendige Spannungsfestigkeit zu erhöhtem Platzbedarf, sodass der Sender insgesamt sehr aufwendig ausgestaltet sein muss.

Eine mögliche Verringerung der Anodengleichspannung würde bei den herkömmlichen Endröhren zwar zu einer Verringerung des konstruktiven Aufwands führen, setzte aber auf der anderen Seite den Wirkungsgrad der Röhre und damit den Gesamtwirkungsgrad des Senders auf einen nicht mehr vertretbaren Wert herab.

## DARSTELLUNG DER ERFINDUNG

Aufgabe der vorliegenden Erfindung ist es daher, einen Rundfunksender zu schaffen, der sich bei gleichbleibendem Wirkungsgrad durch einen verminderten konstruktiven Aufwand sowie geringeren Platzbedarf auszeichnet.

Die Aufgabe wird bei einem AM-Rundfunksender der eingangs genannten Art dadurch gelöst, dass

(c) die Endstufenröhre eine Niederspannungs-Tetrode ist, welche mit einer Anodengleichspannung <10 kV betrieben wird; und

(d) die Endstufenröhre einen Anodenwirkungsgrad von grösser 80% aufweist.

Der Kern der Erfindung besteht darin, als Endstufenröhre eine sogenannte "Low Voltage"- oder Niederspannungs-Tetrode zu verwenden, die bei deutlich verringerter Anodengleichspannung einen vergleichbaren Wirkungsgrad wie herkömmliche Hochleistungs-Tetroden aufweist.

Eine erste bevorzugte Ausführungsform des Rundfunksenders nach der Erfindung zeichnet sich dadurch aus, dass

(a) die Kathode der Endstufenröhre als indirekt geheizte, BaO enthaltende Matrixkathode ausgebildet ist;

(b) das Steuergitter und das Schirmgitter der Endstufenröhre untereinander und von der Matrixkathode einen Abstand (a2,a1) kleiner 1 mm haben;

(c) das Steuergitter mit einer Steuergitterspannung grösser -250 V betrieben wird; und

(d) das Schirmgitter mit einer Schirmgitterspannung kleiner 650 V betrieben wird.

Die Reduktion der Anodengleichspannung bei gleichbleibendem Wirkungsgrad wird bei dieser Ausführungsform erreicht durch eine erhebliche Verringerung der Elektrodenabstände, die unter anderem dadurch möglich wird, dass durch einen speziellen Aufbau der Kathode die Kathodentemperatur drastisch reduziert ist.

Da mit der Anodengleichspannung auch die Gittergleichspannungen verringert werden (die Steuergittergleichspannung bestimmt die oben erwähnte Anodenrestspannung), kann der Wirkungsgrad der Röhre und damit des Senders weitgehend gehalten werden.

Bei einer weiteren bevorzugten Ausführungsform ist

(a) der Modulationsverstärker als digitaler Pulstufenmodulations(PSM)-Verstärker ausgebildet;

(b) zwischen dem Modulationsverstärker und dem NF-Eingang ein A/D-Wandler angeordnet; wobei

(c) der Modulationsverstärker eine Mehrzahl von gleichartigen Schaltstufen umfasst; und

(d) die Anzahl der Schaltstufen kleiner als 20, vorzugsweise kleiner gleich 14 ist.

Weitere Ausführungsformen ergeben sich aus den Unteransprüchen.

## KURZE BESCHREIBUNG DER ZEICHNUNG

Die Erfindung soll nachfolgend anhand von Ausführungsbeispielen im Zusammenhang mit der Zeichnung näher erläutert werden. Es zeigen

Fig. 1    den schematischen Aufbau eines Kurzwellensenders gemäss einem bevorzugten Ausführungsbeispiel der Erfindung;

Fig. 2    im Querschnitt den beispielhaften Aufbau einer "Low Voltage"-Tetrode, wie sie in einem Sender gemäss Fig. 1 Anwendung findet; und

Fig. 3    im vergrösserten Ausschnitt die Geometrie der Elektrodenanordnung in einer Röhre gemäss Fig. 2.

## WEGE ZUR AUSFÜHRUNG DER ERFINDUNG

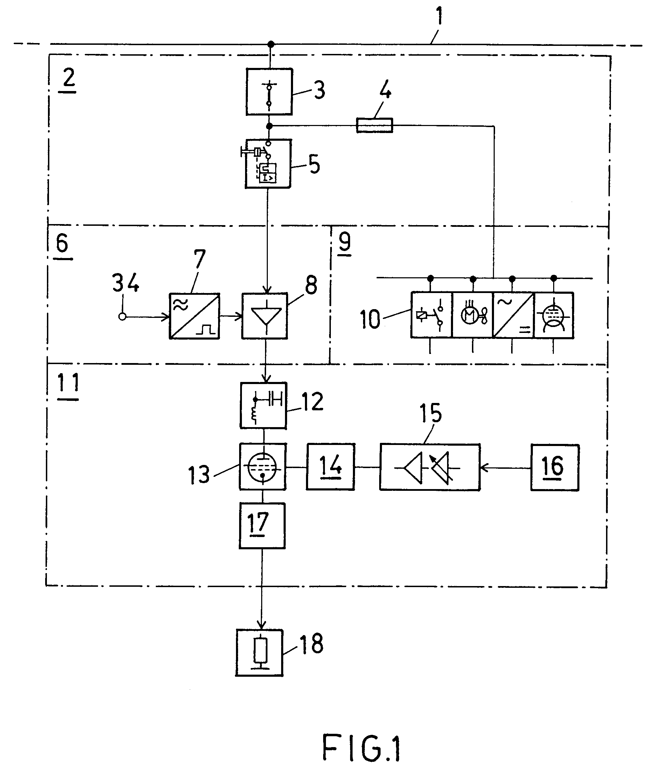

Die Erfindung wird nachfolgend am Beispiel eines 100-kW-Kurzwellensenders erläutert, dessen schematische Schaltungsanordnung in Fig. 1 dargestellt ist. Der Sender umfasst im wesentlichen vier Funktionsteile, nämlich einen Netzeingangsteil 2, einen NF-Teil 6, einen Steuerteil 9 (Elektronik und Hilfsbetriebe) und einen HF-Teil 11.

Der Netzeingangsteil 2 steht mit einem Netz 1 (z.B. 380 V, dreiphasig, 50/60 Hz) in Verbindung und enthält einen Hauptschalter 3, einen Ueberstromschutz 5 und eine Sicherung 4. Die Stromzuführung erfolgt aus dem Netz 1 über den Hauptschalter 3 und verzweigt sich anschliessend. Der eine Zweig geht über die Sicherung 4 zum Steuerteil 9, der andere Zweig den Ueberstromschutz 5 zum NF-Teil 6.

Im Steuerteil 9 sind Steuerung und verschiedene Hilfsbetriebe 10 zusammengefasst, über die einzelne Teile des Senders wie z.B. die Röhre, Motore oder die Elektronik, mit Strom versorgt werden.

Der NF-Teil 6 enthält einen Modulationsverstärker 8, dessen Eingang mit einem NF-Eingang 34 für das zu übertragende NF-Signal in Verbindung steht. Ist der Modulationsverstärker 8 - wie in diesem Beispiel vorausgesetzt und an sich aus dem Stand der Technik bekannt - als digitaler PSM-Verstärker ausgeführt, ist zwischen dem NF-Eingang 34 und dem Eingang des Modulationsverstärkers 8 zusätzlich ein A/D-Wandler 7 angeordnet, der das analoge NF-Signal in ein digitales Steuersignal für den PSM-Verstärker umwandelt.

Der HF-Teil 11 umfasst einen Tiefpass 12 (Anodensieb), eine Endstufenröhre 13 in Form einer Tetrode mit Anode, Schirmgitter, Steuergitter und Kathode, einen Treiberkreis 14, einen Treiberverstärker 15, einen Oszillator 16 sowie einen Ausgangskreis 17.

Die Ausgangsspannung des Modulationsverstärkers 8 aus dem NF-Teil gelangt über den Tiefpass 12 als Anodenspannung auf die Anode der Endstufenröhre 13. Der Oszillator 16 erzeugt eine Trägerfrequenz, die im Treiberverstärker 15 (z.B. einem transistorisierten 1 kW-Verstärker) leistungsverstärkt und dann über den Treiberkreis 14 auf das Steuergitter der Endstufenröhre 13 gegeben wird. Die in der Endstufenröhre 13 erzeugte amplitudenmodulierte Trägerschwingung wird dann über den Ausgangskreis 17 an eine an den Sender angeschlossene Last 18, in der Regel eine Antenne, abgegeben.

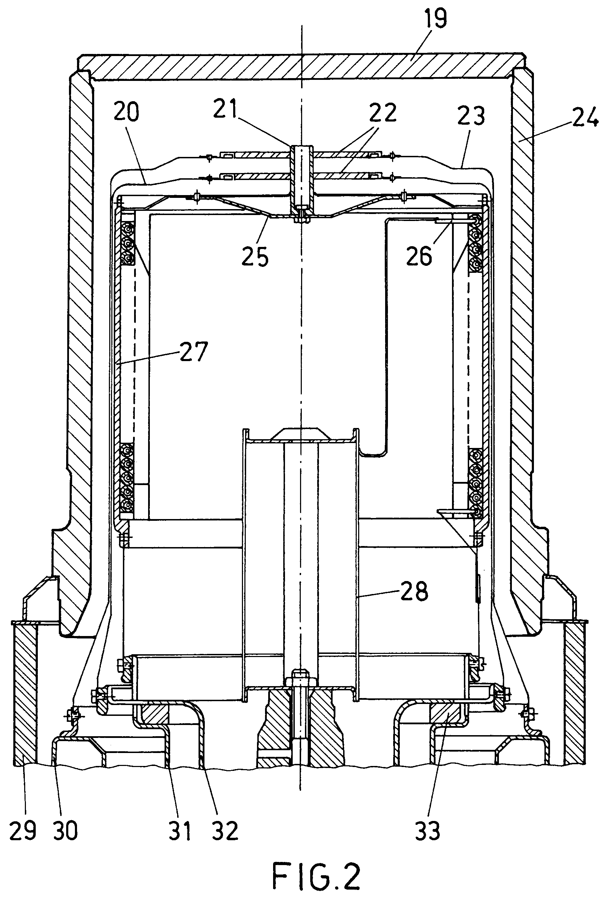

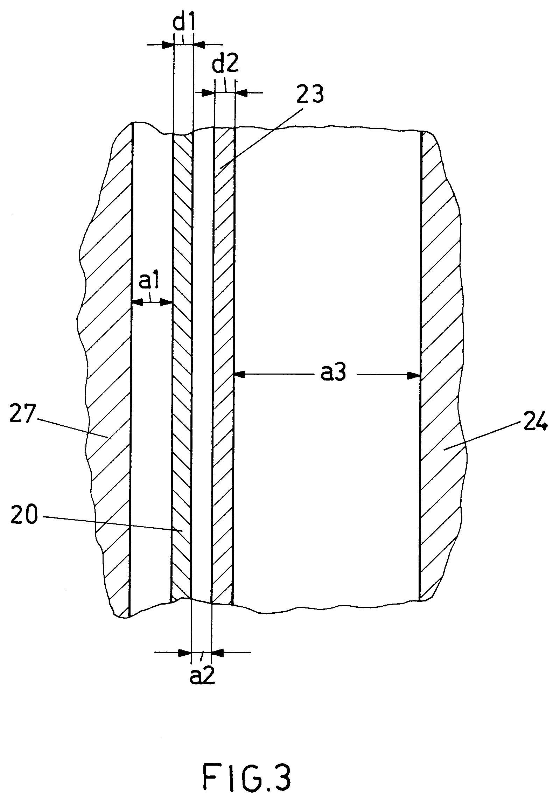

Erfindungswesentlich ist die Endstufenröhre 13. Sie ist als eine "Low Voltage"-Tetrode ausgebildet, die bei einem Anodenwirkungsgrad von grösser 80% (hier: >83%) mit einer Anodengleichspannung von weniger als 10 kV (hier: 5 kV) betrieben wird. Eine bevorzugte Ausführungsform einer solchen "Low Voltage"-Tetrode, die als Endstufenröhre für den 100-kW-Kurzwellensender vorgesehen ist, ist in Fig. 2 im Schnitt wiedergegeben. Aus Gründen der Uebersichtlichkeit ist dabei auf eine detaillierte Darstellung des unteren Röhrenfusses sowie der äusseren Anodenkühlung verzichtet worden. Die Elektrodenanordnung der Röhre ist ausschnittweise und vergrössert in Fig. 3 dargestellt.

Die gezeigte Röhre enthält als wesentliche Elemente in koaxialer Anordnung von innen nach aussen eine zylindrische Matrixkathode 27, ein topfförmiges Steuergitter 20, ein topfförmiges Schirmgitter 23 sowie einen Anodenzylinder 24, der oben durch einen Anodendeckel 19 verschlossen ist.

Der Anodenzylinder 24 ist zum Röhrenfuss hin durch einen Keramikring 29 isoliert. Das Schirmgitter 23 geht nach unten hin in einen Schirmgitter-Anschluss 30, das Steuergitter 20 in einen Steuergitter-Anschluss 32, und die Matrixkathode 27 in einen Kathoden-Anschluss 31 über.

Die Matrixkathode 27 enthält in einer Metallmatrix BaO, welches auf der Oberfläche eine Ba-Schicht bildet, die gegenüber herkömmlichen Wolfram-Thorium-Kathoden (Arbeitstemperatur: etwa 1900°K) bei sehr viel niedrigeren Temperaturen (etwa 1000-1100°K) emittiert. Die Matrixkathode 27 wird durch eine auf ihrer Innenseite angeordnete Heizwendel 26 indirekt beheizt. Der dazu benötigte Heizstrom wird der Heizwendel über einen zentralen inneren Blechzylinder 28 und den Kathoden-Anschluss 31 zugeführt.

Die vergleichsweise niedrige Arbeitstemperatur der Matrixkathode 27 reduziert neben der erforderlichen Heizleistung vor allem die durch Temperaturunterschiede hervorgerufenen thermo-mechanischen Verspannungen im Elektrodensystem, sodass Steuergitter 20 und Schirmgitter 23 sehr nahe an der Kathode angeordnet werden können.

Während bei einer herkömmlichen Hochleistungs-Sendetetrode mit Wolfram-Thorium-Kathode und einer Anodengleichspannung von etwa 14 kV der Abstand zwischen der Kathode und dem Steuergitter und der Abstand zwischen dem Steuergitter und dem Schirmgitter zwischen 1 und 2 mm betragen, sind diese Abstände ($a_1$ und $a_2$ in Fig. 3) beim hier beschriebenen Ausführungsbeispiel kleiner 1 mm und betragen vorzugsweise etwa 0,55 mm bzw. 0,45 mm für eine "Low Voltage"-Tetrode mit einer Anodengleichspannung von etwa 5 kV.

Die kleinen Elektrodenabstände erfordern eine sorgfältige Befestigung der einzelnen Elektroden: Steuergitter 20 und Schirmgitter 23 sind an ihrem oberen Ende über Keramikscheiben 22 und eine zentrale Keramikhülse 21 an einem von der Matrixkathode 27 ausgehenden Halteblech 25 befestigt. Im Röhrenfuss wird der Steuergitter-Anschluss 32 durch den Kathoden-Anschluss 31 hindurch ins Innere geführt und dort mittels eines keramischen Abstandsringes 33 am Kathoden-Anschluss 31 abgestützt. Durch diese Massnahmen können die kritischen Elektrodenabstände besonders wirkungsvoll eingehalten werden.

Steuergitter 20 und Schirmgitter 23 werden bevorzugt in Form durchbrochener Zylinder aus pyrolytischem Graphit gefertigt und jeweils mit einer Dicke ($d_1$ bzw. $d_2$ in Fig. 3) von etwa 0,3 mm hergestellt. Der Abstand zwischen dem Schirmgitter 23 und dem Anodenzylinder 24 ($a_3$ in Fig. 3) beträgt dann etwa 6,4

4

EP 0 496 009 A1

mm.

Zur besseren Uebersicht sollen nachfolgend in einer Tabelle die elektrischen Betriebswerte einer "Low Voltage"-Tetrode (LVT) in der bevorzugten Ausführungsform für einen 100-kW-Kurzwellensender noch einmal den Betriebswerten einer herkömmlichen Tetrode gleicher Leistung (der eingangs erwähnten BBC CQK 50-2) gegenübergestellt werden:

| Betriebsgrösse | LVT | CQK 50-2 |
|---|---|---|
| Anodengleichspannung | 5 kV | 11 kV |
| Schirmgitterspannung | $\leq$ 500 V | 800 V |
| Steuergitterspannung | -150 V | -600 V |
| Steuergittergleichstrom | 1 A | 0,4 A |
| Anodengleichstrom | $\leq$ 26 A | 10 A |
| Anodenwirkungsgrad | > 83 % | 85 % |
| Heizleistung | < 2 kW | 4,2 kW |

Aus der Tabelle lässt sich ohne weiteres erkennen, dass die "Low Voltage"-Tetrode gegenüber der herkömmlichen Tetrode bei nahezu unverändertem Wirkungsgrad für ihren Betrieb eine sehr viel kleinere Anodengleichspannung, eine erheblich geringere Ansteuerleistung und eine stark reduzierte Heizleistung erfordert.

Diese Eigenschaften haben unmittelbare vorteilhafte Auswirkungen auf die konstruktive Auslegung des Senders:

- Wegen der niedrigen Anodengleichspannung kann der Modulationsverstärker 8, wenn er gemäss einer bevorzugten Ausführungsform als digitaler PSM-Verstärker ausgebildet ist, statt wie bisher mit 32 nun nur noch mit 14 oder weniger Schaltstufen ausgerüstet sein. Dadurch reduziert sich der Platzbedarf in einem solchen Umfang, dass der PSM-Verstärker direkt im Schrank für den HF-Teil untergebracht werden kann.

- Wegen der niedrigen Ansteuerleistung kann die vorher übliche Treiberröhre durch einen transistorisierten Treiberverstärker geringerer Leistung ersetzt werden, was dem Gesamtwirkungsgrad zugute kommt und den Platzbedarf weiter verringert.

- Wegen der reduzierten Heizleistung und der niedrigen Kathodentemperatur verbessert sich der Wirkungsgrad und vergrössert sich die Lebensdauer der Endstufenröhre erheblich.

Insgesamt wird also durch die Erfindung ein Sender geschaffen, der sich bei unverändert hohem Gesamtwirkungsgrad durch einen kompakten Aufbau und eine sehr hohe Zuverlässigkeit auszeichnet.

**Patentansprüche**

1. AM-Rundfunksender, insbesondere Kurzwellensender, mit einer Ausgangsleistung von wenigstens 50 kW, umfassend

(a) einen NF-Teil (6) mit einem NF-Eingang (34) und einem an den NF-Eingang (34) angeschlossenen Modulationsverstärker (8); und

(b) einen HF-Teil (11) mit einem Oszillator (16), einem an den Oszillator (16) angeschlossenen Treiberverstärker (15) und einer Endstufenröhre (13) in Form einer Tetrode, welche eine Anode, eine Kathode, ein Steuergitter (20) und ein Schirmgitter (23) aufweist, wobei die Anode mit dem Ausgang des Modulationsverstärkers (8) und das Steuergitter (20) mit dem Ausgang des Treiberverstärkers (15) in Verbindung stehen;

dadurch gekennzeichnet, dass

(c) die Endstufenröhre (13) eine Niederspannungs-Tetrode ist, welche mit einer Anodengleichspannung <10 kV betrieben wird; und

(d) die Endstufenröhre (13) einen Anodenwirkungsgrad von grösser 80% aufweist.

2. Rundfunksender nach Anspruch 1, dadurch gekennzeichnet, dass

(a) die Kathode der Endstufenröhre (13) als indirekt geheizte, BaO enthaltende Matrixkathode (27) ausgebildet ist;

(b) das Steuergitter (20) und das Schirmgitter (23) der Endstufenröhre (13) untereinander und von der Matrixkathode (27) einen Abstand (a2,a1) kleiner 1 mm haben;

(c) das Steuergitter (20) mit einer Steuergitterspannung grösser -250 V betrieben wird; und

(d) das Schirmgitter (23) mit einer Schirmgitterspannung kleiner 650 V betrieben wird.

5

**3.** Rundfunksender nach Anspruch 2, dadurch gekennzeichnet, dass

(a) der Rundfunksender ein Kurzwellensender mit einem Frequenzbereich von wenigstens 6 bis 26 MHz und einer Ausgangsleistung von 100 kW ist;

(b) die Endstufenröhre (13) mit einer Anodengleichspannung von etwa 5 kV betrieben wird;

(c) die Schirmgitterspannung kleiner gleich 500 V ist;

(d) die Steuergitterspannung etwa gleich -150 V ±30% ist;

(e) der Abstand (a1) vom Steuergitter (20) zur Matrixkathode (27) etwa 0,55 mm und der Abstand (a2) von dem Schirmgitter (23) zum Steuergitter (20) etwa 0,45 mm betragen;

(f) Steuergitter (20) und Schirmgitter (23) als durchbrochene Zylinder aus pyrolytischem Graphit ausgebildet sind; und

(g) Kathode und Steuergitter (20) am Fuss der Endstufenröhre (13) einen zylindrischen Kathoden-Anschluss (31) bzw. Steuergitter-Anschluss (32) aufweisen, wobei der Steuergitter-Anschluss (32) koaxial im Inneren des Kathoden-Anschlusses (31) verläuft und gegen diesen mittels eines Abstandsringes (33) fixiert ist.

**4.** Rundfunksender nach Anspruch 3, dadurch gekennzeichnet, dass

(a) der Modulationsverstärker (8) als digitaler Pulstufenmodulations(PSM)-Verstärker ausgebildet ist;

(b) zwischen dem Modulationsverstärker (8) und dem NF-Eingang (34) ein A/D-Wandler (7) angeordnet ist.

(c) der Modulationsverstärker (8) eine Mehrzahl von gleichartigen Schaltstufen umfasst; und

(d) die Anzahl der Schaltstufen kleiner als 20, vorzugsweise kleiner gleich 14 ist.

FIG.1

FIG.2

FIG.3

Europäisches
Patentamt

**EUROPÄISCHER RECHERCHENBERICHT**

Nummer der Anmeldung

EP    91 10 0662

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | BROWN BOVERI REVIEW<br>Bd. 69, Nr. 6, Juni 1982, BADEN,CH<br>Seiten 212 - 217;<br>LANGEMEIER ET AL: 'The New 250 kW Short-Wave Transmitter'<br>* das ganze Dokument *<br>--- | 1-4 | H04B1/04 |
| A,D | BROWN BOVERI REVIEW<br>Bd. 71, Nr. 5, Mai 1984, BADEN, CH<br>Seiten 197 - 201;<br>K. HOLM ET AL: 'Development Concepts for Tubes in High Power Broadcasting Transmitters'<br>* das ganze Dokument *<br>--- | 1-4 | |
| A | DE-A-2 759 147 (PHILIPS)<br>* Seite 5, Zeile 1 - Seite 7, Zeile 18 *<br>--- | 1-4 | |
| A | BROWN BOVERI REVIEW<br>Bd. 74, Nr. 6, Juni 1987, BADEN, CH<br>Seiten 296 - 302;<br>TSCHOL ET AL: 'Latest Developments in the High-Power Transmitter Sector'<br>----- | | **RECHERCHIERTE SACHGEBIETE (Int. Cl.5 )**<br><br>H04B<br>H01J<br>H03C |

Der vorliegende Recherchenbericht wurde für alle Patentansprüche erstellt

| Recherchenort | Abschlußdatum der Recherche | Prüfer |
|---|---|---|
| DEN HAAG | 15 JANUAR 1992 | ANDERSEN J.G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..........................................................................................
& : Mitglied der gleichen Patentfamilie, übereinstimmendes Dokument

EPO FORM 1503 03.82 (P0403)